# EUROPEAN PATENT SPECIFICATION

(11) **EP 2 190 888 B1**
(45) Date of publication and mention of the grant of the patent: **11.06.2014**
(21) Application number: 08800412.2
(22) Date of filing: 30.09.2008
(51) Int. Cl.: C08F 4/646, C08F 10/02, C08F 4/02, C08F 4/22, C08F 4/6392, C08F 4/69, C08F 4/6592, C08F 210/16

(54) **A CO-SUPPORTED CATALYST SYSTEM COMPRISING CHROMIUM AND GROUP 4 METAL COMPLEX**
CO-GETRÄGERTES KATALYSATORSYSTEM, UMFASSEND CHROM UND EINEN GRUPPE-4-METALL-KOMPLEX
SYSTÈME DE CATALYSEURS CO-SUPPORTÉS COMPRENANT DU CHROME ET UN COMPLEXE DE MÉTAL DU GROUPE 4

(30) Priority: 01.10.2007 CA 2605077
(43) Date of publication of application: 02.06.2010
(73) Proprietor: Nova Chemicals (International) S.A., 1700 Fribourg (CH)
(72) Inventor: HOANG, Peter, Phung, Minh, Calgary, Alberta T3A 5W1 (CA); KER, Victoria, Calgary, Alberta T3K 3X4 (CA); FUNK, Bradley, Calgary, Alberta T2N 2P3 (CA)
(74) Representative: Watson, Robert James
(86) International application number: PCT/CA2008/001737
(87) International publication number: WO 2009/043156

(56) References cited:
- EP-A1- 0 339 571
- CA-A1- 2 215 444
- CA-A1- 2 278 042
- CA-A1- 2 527 580
- CA-A1- 2 583 007
- US-A- 5 723 399
- US-A- 5 965 677
- US-A- 6 013 595
- US-A1- 2007 049 711
- US-B1- 6 780 809
- US-B2- 7 163 906

## Description

### TECHNICAL FIELD

The present invention relates to polymerization processes in which a co-supported catalyst system is used to produce polyethylene polymers having a broad or bimodal molecular weight distribution. Specifically, the use of a catalyst system comprising co-supported chromium and organometallic catalysts is described.

### BACKGROUND ART

Co-supported or mixed catalyst systems for use in olefin polymerization often include a catalyst having a low response to hydrogen and a catalyst having a high response to hydrogen. Such catalysts provide polyethylene polymers with broad or multimodal molecular weight distribution: a low response to hydrogen facilitates the formation of high molecular weight polymer fractions, while a high response to hydrogen facilitates the formation of low molecular weight polymer fractions. Polyethylene resins having a broad or bimodal molecular weight distribution are desirable due to their improved mechanical properties, such as an increased environmental stress cracking resistance (ESCR), as well as their good processability. Two or more catalysts may be co-supported on a single support for use in gas or slurry phase polymerization processes in order to provide homogeneous product particles, but mixed catalysts systems, in which each catalyst component is supported separately, may also be used.

Co-supported and mixed catalysts capable of producing bimodal polyethylene having a reversed comonomer incorporation have also been developed. Bimodal polyethylene resins having a reversed comonomer distribution generally have high PENT performance properties and good processing characteristics making them particularly suitable for use in the formation of high pressure pipe.

Chromium based polymerization catalysts can also be used to produce polyethylene with a broad, sometimes bimodal molecular weight distribution. In order to further improve upon such resins, chromium catalysts have been combined with various other transition metal catalysts in co-supported or mixed catalyst formulations. Indeed, polymerization catalysts comprising active chromium compounds and group 4 transition metal compounds are known, despite conventional wisdom that teaches that chromium catalysts and group 4 transition metal catalysts tend to deactivate each other.

For example, US Pat. No. 7,163,906 describes "metallocene combination catalysts" which comprise at least one group 4 based metallocene compound and at least one organochromium compound, which are both supported on a single chemically treated solid metal oxide. The "metallocene combination catalysts" are useful in the production of bimodal polyethylene resins.

US Pat. No. 6,794,326 teaches a catalyst system comprising chromium oxide and a zirconium based metallocene, co-supported on an inorganic oxide support.

US Pat. No. 6,780,809 discloses a modified chromium oxide catalyst for the polymerization of ethylene to give bimodal resin. The modified catalyst comprises a chromium oxide catalyst that has been co-supported on an inorganic oxide with a transition metal compound and a catalyst activator. The transition metal compound is preferably a group 4 compound that has at least one cyclopentadienyl ligand. Both catalysts components are supported on the same support particles and the catalyst provides a homogeneous product powder.

US Pat. No. 5,723,399 describes an ethylene polymerization catalyst which comprises a chromium based polymerization catalyst, which includes chrome oxides, silyl chromates and amido chromates, which is co-supported on a metal oxide with a transition metal compound which includes metallocenes, constrained geometry catalysts and catalysts having amidinato ligands.

US Pat. Nos. 4,701,432; 5,077,255; 5,124,418; and 5,183,867 disclose a dual catalyst formulation in which a non-metallocene catalyst and a metallocene catalyst are immobilized on an inorganic oxide for use in olefin polymerization processes. The non-metallocene catalysts are compounds of a group 4, 5 or 6 metal, excluding compounds having a cyclopentadienyl ligand. Non-metallocenes based on group 4 are preferred for use in the dual catalysts.

EP No. 339,571 describes a process in which a titanium or chromium compound is added to an inorganic oxide to provide a titanium or chromium containing inorganic oxide support material, which is subsequently heat treated at between 300°C and 1000°C. To the heat treated support was added a metallocene compound, and the resulting supported dual catalyst system was used in the polymerization of ethylene.

In US Pat. No. 6,013,595 the use of a "catalytic solid" for (co)polymerization of ethylene was reported. The catalytic solid, which comprises an least one inorganic oxide support, at least one transition metal metallocene catalyst, at least one metallocene activator compound and at least one chromium compound, is used to produce polyethylene with a broad molecular weight distribution.

US Pat. Nos. 5,032,651 and 5,104,839 teach a polymerization process for polymerizing ethylene using a mixed catalyst system. The mixed catalyst system consists of a first component comprising a supported chromium oxide catalyst, and a second catalyst component comprising a tetrabenzylzirconium catalyst that has been separately supported. The chromium oxide is supported on a solid aluminophosphate particulate support, while the tetrabenzylzirconium catalyst is supported on a separate inorganic particulate support that is preferably also an aluminophosphate particulate support. The polymers obtained using the mixed catalyst system have improved environmental stress cracking resistance (ESCR) relative to polymers made from a chromium catalyst alone.

US Pat. No. 6,180,731 describes a process in which a Phillips catalyst is combined with a separately supported metallocene catalyst to produce a polyethylene resin in the gas phase. The polyethylenes made with the mixed catalyst system are resistant to stress cracking.

US Pat. No. 6,734,131 discloses a clay-silica agglomerate for use as a support for chromium based polymerization catalysts. The agglomerate support facilitates the formation of broad molecular weight or bimodal polyethylene. The patent also teaches that a supplemental catalyst consisting of an agglomerate supported metallocene catalyst, transition metal bidentate or tridentate ligand catalyst, or constrained geometry catalyst may be used in combination with the agglomerate supported chromium catalyst.

Similarly, US Pat. Nos 6,958,375; 6,946,420 teach the use of a clay-silica agglomerate as a support for the co-immobilization of a bidentate or tridentate ligand transition metal catalyst with a chromium catalyst.

Despite the above progress, further investigation into mixed or co-supported catalysts containing a chromium catalyst and other transition metal catalysts is required to discover new compatible catalyst components capable of improving the properties of existing resins. For example, none of the above co-supported or mixed catalyst systems comprising a chromium based catalyst component teach the formation of bimodal polyethylene having reversed comonomer incorporation. In addition, there is no teaching of the use of polymerization catalysts having at least one phosphinimide or ketimide ligand.

### DISCLOSURE OF INVENTION

The present invention provides a catalyst system comprising a co-supported group 6 based polymerization catalyst and a group 4 based polymerization catalyst which do not significantly deactivate or poison one another when immobilized on a single support.

In one aspect, the invention provides a polymerization catalyst system comprising:
a) a chromium catalyst; and
b) an organometallic catalyst;
   co-supported on an inorganic oxide, wherein the organometallic catalyst comprises:
   i) an organometallic complex having the formula: 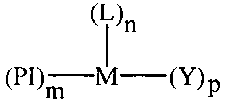 wherein, M is a group 4 metal; Pl is a phosphinimide ligand or a ketimide ligand; L is a monoanionic ligand selected from the group consisting of a cyclopentadienyl type ligand or a bulky heteroatom ligand; Y is an activatable ligand; Pl and L may optionally be joined by a bridging group; two Pl ligands may optionally be joined by a bridging group; m is 1 or 2; n is 0 or 1; and p is an integer and the sum of m+n+p equals the valence state of M; and
   ii) an activator.

In another aspect of the invention, a process is provided to produce broad, bimodal or multimodal polyethylene polymers having at least one higher molecular weight fraction having a greater comonomer incorporation than that of a lower molecular weight fraction.

In another aspect of the invention, a process is provided to produce an ethylene homopolymer or copolymer comprising contacting ethylene and optionally an α-olefin with a catalyst system in a polymerization reactor, wherein the catalyst system comprises:
a) a chromium catalyst; and
b) an organometallic catalyst;
   co-supported on an inorganic oxide, wherein the organometallic catalyst comprises:
   i) an organometallic complex having the formula: 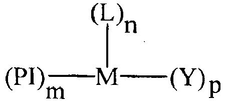 wherein, M is a group 4 metal; Pl is a phosphinimide ligand or a ketimide ligand; L is a monoanionic ligand selected from the group consisting of a cyclopentadienyl type ligand or a bulky heteroatom ligand; Y is an activatable ligand; Pl and L may optionally be joined by a bridging group; two Pl ligands may optionally be joined by a bridging group; m is 1 or 2; n is 0 or 1; and p is an integer and the sum of m+n+p equals the valence state of M; and
   ii) an activator.

The present invention also provides a process in which the ratio of catalysts on a support can be changed to manipulate the properties of the product resin.

### BRIEF DESCRIPTION OF DRAWINGS

Figure 1 is a Gel Permeation Chromatograph (GPC) profile of a polymer prepared according to Example 1 (Comparative).
Figure 2 is a GPC profile of a polymer prepared according to Example 2 (Comparative).
Figure 3 is a GPC profile of a polymer prepared according to an embodiment of the current invention (Example 3).

### BEST MODE FOR CARRYING OUT THE INVENTION

The present invention is directed to a polymerization process using a catalyst system comprising: (a) a chromium catalyst and (b) a group 4 transition metal catalyst having at least one phosphinimide or ketimide ligand, with both catalysts being co-immobilized on an inorganic oxide support. As defined herein, the group 4 transition metal catalyst having at least one phosphinimide or ketimide ligand, is an "organometallic complex".

In the current invention, the term "co-supported" or "co-supported catalyst(s)" is used to describe a catalyst system in which at least two polymerization catalysts are supported on the same batch of support particles. The term "mixed catalyst(s)" connotes a polymerization catalyst system in which at least two polymerization catalysts have been supported separately on different batches of support particles that may be of the same or different type.

In the current invention, at least two catalysts are immobilized (i.e. supported) by co-supporting them on the same batch of support material. Hence the catalysts of the current invention are "co-supported" catalyst systems as defined above.

By the term "immobilized" it is meant that the polymerization catalysts are physically or chemically adsorbed onto a support surface or absorbed within a support. The terms "deposited" and "supported" can be used interchangeably with "immobilized".

Catalyst supports are well known in the art and may be chosen from a wide range of well known materials or mixtures thereof. For example, catalyst support materials include inorganic oxides, such as but not limited to silica gel; magnesium halides; zeolites; layered clay minerals; agglomerated support materials; and polymer supports such as but not limited to polyethylene, polypropylene, polystyrene, or poly(aminostyrene) supports. In some cases, a support material can also act as a polymerization catalyst activator or as a co-activator. For example, supports that contain aluminoxane functionalities or where the support is capable of performing similar chemical functions as an aluminoxane, are suitable for use as a "support-activator".

The supported catalysts of the current invention can be formed in situ in the presence of the support material (i.e. in a polymerization reactor or on route to a reactor), or the support can be pre-impregnated or premixed, simultaneously or sequentially, with one or more polymerization catalysts

Preferred supports for use in the current invention are inorganic oxides.

The inorganic oxide used in the current invention may be any oxide of the metals from groups 2, 3, 4, 11, 12, 13 and 14 of the Period Table of Elements. Preferred inorganic oxides include silica, SiO₂; aluminophosphate, AlPO₄; magnesia, MgO; alumina, Al₂O₃; titania, TiO₂; zinc oxide, ZnO; and zirconia, ZrO₂ and the like or mixtures thereof, with SiO₂ being most preferred. When the inorganic oxide is a silica support, it will contain not less than 80% by weight of pure SiO₂, the balance being other oxides such as but not limited to oxides of Zr, Zn, Mg, Ti, Mg and P.

The inorganic oxide support is composed of particles having a spheroid shape and a size ranging from about 10 micrometers to about 150 micrometers (µm). The particle size distribution can be broad or narrow. The inorganic oxide typically will have a surface area of at least about 100 m²/g, preferably from about 150 to 1,500 m²/g. The pore volume of the inorganic oxide support should be at least 0.2, preferably from about 0.3 to 5.0 ml/g. The surface area and pore volume are determined by nitrogen adsorption according to B.E.T. techniques, which are well known in the art and are described in the Journal of the American Chemical Society, 1939, v 60, pg 209-319.

Generally, the inorganic oxide support will contain acidic surface hydroxyl groups that will react with a polymerization catalyst. Prior to use, the inorganic oxide may be dehydrated to remove water and to reduce the concentration of surface hydroxyl groups. For example, the inorganic oxide may be heated at a temperature of at least 200°C for up to 24 hrs, typically at a temperature of from about 500°C to about 800°C for about 2 to 20 hrs, preferably 4 to 10 hrs. The resulting support will be free of adsorbed water and should have a surface hydroxyl content from about 0.1 to 5 mmol/g of support, preferably from 0.5 to 3 mmol/g. The amount of hydroxyl groups in a silica support may be determined according to the method disclosed by J. B. Peri and A. L. Hensley Jr., in J. Phys. Chem., 72 (8), 1968, pg 2926.

A silica support that is suitable for use in the present invention has a high surface area and is amorphous. By way of example, useful silicas are commercially available under the trademark of Sylopol® 958, 955 and 2408 by the Davison Catalysts, a Division of W. R. Grace and Company and ES-70W by Ineos Silica.

Although heating is the preferred means of removing surface hydroxyl groups present in inorganic oxides, such as silica, the hydroxyl groups may also be removed by other removal means, such as chemical means. For example, a desired proportion of OH groups may be reacted with a suitable chemical agent, such as a hydroxyl reactive aluminum compound (e.g. triethyl aluminum) or a silane compound. This method of treatment has been disclosed in the literature and two relevant examples are: U.S. Pat. No. 4,719,193 to Levine in 1988 and by Noshay A. and Karol F. J. in Transition Metal Catalyzed Polymerizations, Ed. R. Quirk, 396, 1989. By way of example, a silica support may be treated with an aluminum compound of the formula R¹_{b}Al(OR¹)ₐX_{3-(a+b)} where a is either 0 or 1, b is an integer from 1 to 3, a+b is from 1 to 3, R¹ is a C₁₋₈ alkyl radical, and X is a chlorine atom. The amount of aluminum compound, R¹_{b}Al(OR¹)ₐX_{3-(a+b)} is such that the amount of aluminum on the support prior to adding the polymerization catalyst will be from about 0 to 2.5 weight %, preferably from about 0 to 2.0 weight % based on the weight of the support.

The chromium catalyst of the current invention is any chromium compound or mixture of compounds capable of polymerizing olefins and which can be deposited on the surface of a support or within a support. Minor amounts of a secondary metal species such as titanium and or aluminum compounds may also be incorporated together with the chromium compound. The chromium compound used can be any appropriate chromium salt or an inorganic or organic chromium compound. For example, chromocene (i.e. bis(cyclopentadienyl)chromium), silyl chromate and chromium oxide may be used. Preferably, the chromium compound is a chromium oxide or a silyl chromate compound.

The chromium oxide may be CrO₃ or any compound that is convertible to CrO₃ under oxidizing conditions. Examples of compounds that are convertible to CrO₃ under oxidizing conditions are disclosed in US Pat. Nos. 2,825,721; 3,023,203; 3,622,251; and 4,011,382 and include but are not limited to chromic acetyl acetone, chromic chloride, chromic nitrate, chromic acetate, chromic sulfate, ammonium chromate, ammonium dichromate and other soluble salts of chromate.

The silyl chromate (i.e. silyl chromium) catalysts will have at least one group of the formula I: 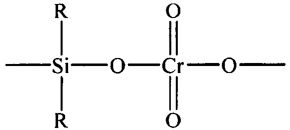 wherein R is a hydrocarbyl group having from 1 to 14 carbon atoms.

In a preferred aspect of the invention, the silyl chromate catalyst is a bis-trihydrocarbylsilylchromate having the formula II: 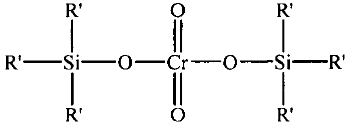 wherein R' is a hydrocarbyl group having from 1 to 14 carbon atoms. R' can independently be any type of hydrocarbyl group such as an alkyl, alkaryl, aralkyl or an aryl radical. Some non-limiting examples include methyl, ethyl, propyl, iso-propyl, n-butyl, iso-butyl, n-pentyl, iso-pentyl, t-pentyl, hexyl, 2-methyl-pentyl, heptyl, octyl, 2-ethylhexyl, nonyl, decyl, hendecyl, dodecyl, tridecyl, tetradecyl, benzyl, phenethyl, p-methyl-benzyl, phenyl, tolyl, xylyl, naphthyl, ethylphenyl, methylnaphthyl, dimethylnaphthyl, and the like. Illustrative of the preferred silylchromates but by no means exhaustive or complete of those that can be employed in this process are such compounds as bis-trimethylsilylchromate, bis-triethylsilylchromate, bis-tributylsilylchromate, bis-triisopentylsilylchromate, bis-tri-2-ethylhexylsilylchromate, bis-tridecylsilylchromate, bis-tri(tetradecyl)silylchromate, bis-tribenzylsilylchromate, bis-triphenethylsilylchromate, bis-triphenylsilylchromate, bis-tritolylsilylchromate, bis-trixylylsilylchromate, bis-trinaphthylsilylchromate, bis-triethylphenylsilylchromate, bis-trimethylnaphthylsilylchromate, polydiphenylsilylchromate, polydiethylsilylchromate and the like. Examples of bis-trihydrocarbylsilylchromate catalysts are also disclosed in U.S. Pat. Nos. 3,704,287 and 4,100,105.

The chromium catalyst may optionally comprise one or more than one co-catalyst. Optionally, the co-catalyst can be added to the supported chromium catalyst in situ.

Co-catalysts include compounds represented by formula:

M*R²*ₙ*

where M* represents an element of the Group 1, 2 or 13 of the Periodic Table, a tin atom or a zinc atom; and each R² independently represents a hydrogen atom, a halogen atom (e.g., chlorine fluorine, bromine, iodine and mixtures thereof), an alkyl group (e.g., methyl, ethyl, propyl, pentyl, hexyl, heptyl, octyl, decyl, isopropyl, isobutyl, s-butyl, t-butyl), an alkoxy group (e.g., methyoxy, ethoxy, propoxy, butoxy, isopropoxy), an aryl group (e.g., phenyl, biphenyl, naphthyl), an aryloxy group (e.g., phenoxy), an arylalkyl group (e.g., benzyl, phenylethyl), an arylalkoxy group (benzyloxy), an alkylaryl group (e.g., tolyl, xylyl, cumenyl, mesityl), or an alkylaryloxy group (e.g., methylphenoxy), provided that at least one R² is selected from a hydrogen atom, an alkyl group having 1 to 24 carbon atoms or an aryl, arylalkyl or alkylaryl group having 6 to 24 carbon atoms; and *n* is the oxidation number of M*.

Preferred co-catalysts are organoaluminum compounds having the formula:

Al²(X¹)ₙ(X²)₃₋ₙ,

where (X¹) is a hydrocarbyl having from 1 to about 20 carbon atoms; (X²) is selected from alkoxide or aryloxide, any one of which having from 1 to about 20 carbon atoms; halide; or hydride; and n is a number from 1 to 3, inclusive. Specific examples of (X¹) moieties include, but are not limited to, ethyl, propyl, n-butyl, sec-butyl, isobutyl, hexyl, and the like. In another aspect, (X²) may be independently selected from fluoro or chloro. The value of n is not restricted to be an integer, therefore this formula includes sesquihalide compounds or other organoaluminum cluster compounds.

Some non-limiting examples of aluminum co-catalyst compounds that can be used in this invention include, but are not limited to, trialkylaluminum compounds, dialkylaluminium halide compounds, dialkylaluminum alkoxide compounds, dialkylaluminum hydride compounds, and combinations thereof. Specific examples of organoaluminum co-catalyst compounds that are useful in this invention include, but are not limited to: trimethylaluminum (TMA); triethylaluminum (TEA); triisopropylaluminum; diethylaluminum ethoxide; tributylaluminum; disobutylaluminum hydride; triisobutylaluminum; and diethylaluminum chloride.

The molar ratio of co-catalyst to chromium catalyst can be about from about 1:1 to about 30:1, preferably from about 1:1 to about 15:1.

The organometallic complex used in the current invention has the formula: 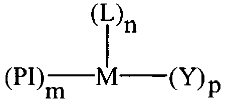 wherein M is a group 4 metal; Pl is independently a phosphinimide ligand or a ketimide ligand; L is a monoanionic ligand selected from the group consisting of a cyclopentadienyl type ligand or a bulky heteroatom ligand; Y is an activatable ligand; m is 1 or 2; n is 0 or 1; and p is an integer and the sum of m+n+p equals the valence state of M. The preferred metals, M are selected from the group IV metals with titanium being most preferred.

The phosphinimide ligand is defined by the formula: 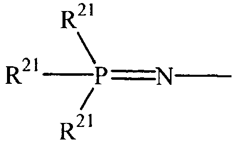 wherein each R²¹ is independently selected from the group consisting of a hydrogen atom; a halogen atom; C₁₋₂₀, preferably C₁₋₁₀ hydrocarbyl radicals which are un-substituted by or further substituted by a halogen atom; a C₁₋₈ alkoxy radical; a C₆₋₁₀ aryl or aryloxy radical; an amido radical; a silyl radical of the formula:

-Si-(R²²)₃

wherein each R²² is independently selected from the group consisting of hydrogen, a C₁₋₈ alkyl or alkoxy radical, and C₆₋₁₀ aryl or aryloxy radicals; and a germanyl radical of the formula:

Ge-(R²²)₃

wherein R²² is as defined above.

As used herein, the term "ketimide ligand" refers to a ligand which: (a) is bonded to the transition metal via a metal-nitrogen atom bond; (b) has a single substituent on the nitrogen atom, (where this single substituent is a carbon atom which is doubly bonded to the N atom); and (c) has two substituents Sub 1 and Sub 2 (described below) which are bonded to the carbon atom. Conditions a, b and c are illustrated below:

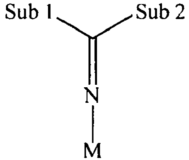

The substituents "Sub 1" and "Sub 2" may be the same or different and can be bonded to each other by a bridging group to form a ring. The bridging group can be any saturated or unsaturated alkyl group or aryl group including fused ring aryl groups, where the alkyl or aryl groups can optionally contain heteroatoms or be further substituted by alkyl, aryl or heteroatom containing alkyl or aryl groups. Exemplary substituents include hydrocarbyls having from 1 to 20 carbon atoms, silyl groups, amido groups and phosphido groups. For reasons of cost and convenience, these substituents may both be hydrocarbyl radicals, especially simple alkyl radicals (e.g. C₁₋₆) such as but not limited to tertiary butyl.

The activatable ligand, Y is independently selected from the group consisting of a hydrogen atom; a halogen atom, a C₁₋₁₀ hydrocarbyl radical; a C₁₋₁₀ alkoxy radical; a C₅₋₁₀ aryl oxide radical; each of which said hydrocarbyl, alkoxy, and aryl oxide radicals may be un-substituted by or further substituted by one or more substituents selected from the group consisting of a halogen atom; a C₁₋₈ alkyl radical; a C₁₋₈ alkoxy radical; a C₆₋₁₀ aryl or aryloxy radical; an amido radical which is un-substituted or substituted by up to two C₁₋₈ alkyl radicals; and a phosphido radical which is un-substituted or substituted by up to two C₁₋₈ alkyl radicals. Most preferably Y is selected from the group consisting of a hydrogen atom, a halide atom and a C₁₋₄ alkyl radical.

By the term "activatable", it is meant that the ligand Y may be cleaved from the metal center M, via a protonolysis reaction or abstracted from the metal center M, by suitable acidic or electrophilic activator compounds respectively, which are further described below. Protonolysis or abstraction reactions generates an active "cationic" metal center which can polymerize olefins, as is well known in the art.

In the current invention, L is a monoanionic ligand selected from the group consisting of a cyclopentadienyl type ligand or a bulky heteroatom ligand. Preferably L is a cyclopentadienyl type ligand.

The term "cyclopentadienyl type ligand" refers to a 5-membered carbon ring having delocalized bonding within the ring and bound to the metal atom through η⁵ bonds and said ligand being un-substituted or up to fully substituted with one or more substituents selected from the group consisting of C₁₋₁₀ hydrocarbyl radicals in which the hydrocarbyl substituents are un-substituted or further substituted by one or more substituents selected from the group consisting of a halogen atom and a C₁₋₈ alkyl radical; a halogen atom; a C₁₋₈ alkoxy radical; a C₆₋₁₀ aryl or aryloxy radical, in which the aryl or aryloxy are un-substituted or further substituted by one or more substituents selected from the group consisting of a halogen atom and a C₁₋₈ alkyl radical; an amido radical which is unsubstituted or substituted by up to two C₁₋₈ alkyl radicals; a phosphido radical which is un-substituted or substituted by up to two C₁₋₈ alkyl radicals; silyl radicals of the formula -Si-(R²²)₃ wherein each R²² is independently selected from the group consisting of hydrogen, a C₁₋₈ alkyl or alkoxy radical, and C₆₋₁₀ aryl or aryloxy radicals; and germanyl radicals of the formula Ge-(R²²)₃ wherein R²² is as defined above; and one or more fused aromatic rings which can be un-substituted or further substituted with one or more substituents selected from the group consisting of a halogen atom, C₁₋₈ alkyl radical and C₆₋₁₀ aryl radical. In an aspect of the invention, the cyclopentadienyl type ligand is selected from the group consisting of an unsubstituted cyclopentadienyl ligand, a (perfluorophenyl)cycloptadienyl ligand, an indenyl ligand and a fluorenyl ligand.

As used herein, the term "bulky heteroatom ligand" refers to a ligand that contains at least one heteroatom selected from the group consisting of boron, nitrogen, oxygen, phosphorus or sulfur. The heteroligand may be sigma or pi-bonded to the metal. Exemplary heteroligands include ketimide ligands, silicone-containing heteroligands, amido ligands, alkoxy ligands, boron heterocyclic ligands (e.g. borabenzene ligands) and phosphole ligands, as further described below.

Silicon containing heteroligands are defined by the formula:

-(µ)SiR^{x}R^{y}R^{z}

wherein the denotes a bond to the transition metal and µ is sulfur or oxygen.

The substituents on the Si atom, namely R^{x}, R^{y} and R^{z} are required in order to satisfy the bonding orbital of the Si atom. The use of any particular substituent R^{x}, R^{y} or R^{z} is not especially important to the success of this invention. It is preferred that each of R^{x}, R^{y} and R^{z} is a C₁₋₂ hydrocarbyl group (i.e. methyl or ethyl) simply because such materials are readily synthesized from commercially available materials.

The term "amido" is meant to convey its broad, conventional meaning. Thus, these ligands are characterized by (a) a metal-nitrogen bond; and (b) the presence of two substituents, which are typically alkyl, phenyl, trialkyl or triaryl silyl groups on the nitrogen atom.

The terms "alkoxy" and "aryloxy" are also intended to convey their conventional meaning. Thus, these ligands are characterized by (a) a metal oxygen bond; and (b) the presence of a hydrocarbyl group bonded to the oxygen atom. The hydrocarbyl group may be a C₁₋₁₀ straight chained, branched or cyclic alkyl radical or a C₆₋₁₃ aromatic radical which radicals are un-substituted or further substituted by one or more C₁₋₄ alkyl radicals (e.g. 2, 6 di-tertiary butyl phenoxy).

Boron heterocyclic ligands are characterized by the presence of a boron atom in a closed ring ligand (e.g. borabenzene ligands which are un-substituted or may be substituted by one or more halogen atoms, C₁₋₁₀ alkyl groups, and/or C₁₋₁₀ alkyl groups containing a hetero atom (e.g. O, or N atoms)). This definition includes heterocyclic ligands that may also contain a nitrogen atom in the ring. These ligands are well known to those skilled in the art of olefin polymerization and are fully described in the literature (see, for example, U.S. Patents 5,637,659; 5,554,775; and references cited therein).

The term "phosphole" is also meant to convey its conventional meaning. "Phospholes" are cyclic dienyl structures having four carbon atoms and one phosphorus atom in the closed ring. The simplest phosphole is C₄PH₄ (which is analogous to cyclopentadiene with one carbon in the ring being replaced by phosphorus). The phosphole ligands may be substituted with, for example, C₁₋₂₀ hydrocarbyl radicals (which may, optionally, contain halogen substituents); phosphido radicals; amido radicals; or silyl or alkoxy radicals. Phosphole ligands are also well known to those skilled in the art of olefin polymerization and are described as such in U.S. Pat. No. 5,434,116 (Sone, to Tosoh).

In an aspect of the invention, Pl and L may be joined by a suitable bridging group. In another aspect of the invention, two PI ligands may be joined by a suitable bridging group. The bridging group may be selected from a group comprising: organic bridging groups including hydrocarbyl, substituted hydrocarbyl, heterohydrocarbyl and a substituted heterohydrocarbyl; inorganic bridging groups; ionic linking groups; and a group comprising: methylene, dimethylmethylene, 1,2-ethane, 1,2-phenylene, 1,2-propane, 1,2-catechol, 1 ,2-dimethylhydrazine, -B(R⁵)-, -Si(R⁵)₂-, -P(R⁵)- and -N(R⁵)- where R⁵ is hydrogen, a hydrocarbyl or substituted hydrocarbyl, a substituted heteroatom, or a halogen.

Some non-limiting examples of bridging group include bridging groups containing at least one Group 13 to 16 atom, often referred to a divalent moiety such as but not limited to at least one of a carbon, oxygen, nitrogen, silicon, boron, germanium and a tin atom or a combination thereof. Preferably, the bridging group contains a carbon, silicon or germanium atom, most preferably at least one silicon atom or at least one carbon atom. The bridging group may also contain substituent radicals, R⁵ as defined above including halogens.

Bridging groups include but are not limited to, a di C₁₋₆ alkyl radical (e.g. alkylene radical for example an ethylene bridge), di C₆₋₁₀ aryl radical (e.g. a benzyl radical having two bonding positions available), silicon or germanium radicals substituted by one or more radicals selected from the group consisting of C₁₋₆ alkyl, C₆₋₁₀ aryl, phosphine or amine radical which are unsubstituted or up to fully substituted by one or more C₁₋₆ alkyl or C₆₋₁₀ aryl radicals, or a hydrocarbyl radical such as a C₁₋₆ alkyl radical or a C₆₋₁₀ arylene (e.g. divalent aryl radicals); divalent C₁₋₆ alkoxide radicals and the like.

The activator, which together with the organometallic complex, makes up the organometallic catalyst of the current invention, is selected from the group consisting of alkylaluminoxanes, ionic activators and electrophilic borane compounds. Preferably the activator will be an alkylaluminoxane or an ionic activator.

The alkylaluminoxanes are complex aluminum compounds of the formula:

R¹²₂Al³O(R¹²Al³O)ₘAl³R¹²₂

wherein each R¹² is independently selected from the group consisting of C₁₋₂₀ hydrocarbyl radicals and m is from 3 to 50. Optionally a hindered phenol can be added to the alkylaluminoxane to provide a molar ratio of Al³:hindered phenol of from 2:1 to 5:1 when the hindered phenol is present.

In an aspect of the invention, R¹² of the alkylaluminoxane, is a methyl radical and m is from 10 to 40. In an aspect of the invention, the molar ratio of Al³:hindered phenol, if it is present, is from 3.25:1 to 4.50:1. Preferably the phenol is substituted in the 2, 4 and 6 position by a C₂₋₆ alkyl, radical. Desirably the hindered phenol is 2,6-di-tertbutyl-4-ethyl-phenol.

The alkylaluminoxanes are typically used in substantial molar excess compared to the amount of group 4 transition metal in the organometallic complex. The Al³:group 4 transition metal molar ratios are from 10:1 to 10,000:1, preferably about 30:1 to 500:1.

The ionic activators include activators that activate the organometallic complex by protonolysis of a suitable activatable ligand or by the electrophilic abstraction of a suitable activatable ligand. Although the "ionic activator" may abstract or cleave one or more activatable ligand so as to ionize the catalyst center into a "cation", it does not covalently bond with the catalyst, providing instead, sufficient distance between the catalyst metal center and the ionizing activator to permit a polymerizable olefin to enter the resulting active site.

The ionic activators used in the present invention are selected from compounds of the formula:

[R¹³]⁺ [B(R¹⁴)₄]⁻

wherein B is a boron atom, R¹³ is a cyclic C₅₋₇ aromatic cation or a triphenyl methyl cation and each R¹⁴ is independently selected from the group consisting of phenyl radicals which are un-substituted or substituted with 3 to 5 substituents selected from the group consisting of a fluorine atom, a C₁₋₄ alkyl or alkoxy radical which is un-substituted or substituted by a fluorine atom; and a silyl radical of the formula -Si-(R¹⁵)₃; wherein each R¹⁵ is independently selected from the group consisting of a hydrogen atom and a C₁₋₄ alkyl radical; and compounds of the formula:

[(R¹⁸)ₜZH]⁺[B(R¹⁴)₄]⁻

wherein B is a boron atom, H is a hydrogen atom, Z is a nitrogen atom or phosphorus atom, t is 2 or 3 and R¹⁸ is selected from the group consisting of C₁₋₈ alkyl radicals, a phenyl radical which is un-substituted or substituted by up to three C₁₋₄ alkyl radicals, or one R¹⁸ taken together with the nitrogen atom may form an anilinium radical and R¹⁴ is as defined above.

Specific ionic activators that may be used in the current invention include but are not limited to: triethylammonium tetra(phenyl)boron, tripropylammonium tetra(phenyl)boron, tri(n-butyl)ammonium tetra(phenyl)boron, trimethylammonium tetra(p-tolyl)boron, trimethylammonium tetra(o-tolyl)boron, tributylammonium tetra(pentafluorophenyl)boron, tripropylammonium tetra(o,p-dimethylphenyl)boron, tributylammonium tetra(m,m-dimethylphenyl)boron, tributylammonium tetra(p-trifluoromethylphenyl)boron, tributylammonium tetra(pentafluorophenyl)boron, tri(n-butyl)ammonium tetra(o-tolyl)boron, N,N-dimethylanilinium tetra(phenyl)boron, N,N-diethylanilinium tetra(phenyl)boron, N,N-diethylanilinium tetra(phenyl)n-butylboron, di-(isopropyl)ammonium tetra(pentafluorophenyl)boron, dicyclohexylammonium tetra(phenyl)boron, triphenylphosphonium tetra(phenyl)boron, tri(methylphenyl)phosphonium tetra(phenyl)boron, tri(dimethylphenyl)phosphonium tetra(phenyl)boron, tropillium tetrakispentafluorophenyl borate, triphenylmethylium tetrakispentafluorophenyl borate, tropillium phenyltrispentafluorophenyl borate, triphenylmethylium phenyltrispentafluorophenyl borate, benzene (diazonium) phenyltrispentafluorophenyl borate, tropillium tetrakis (2,3,5,6-tetrafluorophenyl) borate, triphenylmethylium tetrakis (2,3,5,6-tetrafluorophenyl) borate, tropillium tetrakis (3,4,5-trifluorophenyl) borate, benzene (diazonium) tetrakis (3,4,5-trifluorophenyl) borate, tropillium tetrakis (1,2,2-trifluoroethenyl) borate, triphenylmethylium tetrakis (1,2,2-trifluoroethenyl) borate, tropillium tetrakis (2,3,4,5-tetrafluorophenyl) borate, and triphenylmethylium tetrakis (2,3,4,5-tetrafluorophenyl) borate.

Some readily commercially available ionic activators include: N,N-dimethylaniliniumtetrakispentafluorophenyl borate; triphenylmethylium tetrakispentafluorophenyl borate (tritylborate); and trispentafluorophenyl borane.

The ionic activators may also have an anion containing at least one group comprising an active hydrogen or at least one of any substituent able to react with the support. As a result of these reactive substituents, the anionic portion of these ionic activators may become bonded to the support under suitable conditions. One non-limiting example includes ionic activators with tris(pentafluorophenyl)(4-hydroxyphenyl) borate as the anion. These tethered ionic activators are more fully described in U.S. Pat. Nos 5,834,393; 5,783,512; and 6,087,293.

The electrophilic borane compounds that may be used in the present invention include compounds of the formula:

B(R¹⁴)₃

wherein R¹⁴ is as defined above.

The ionic activators or electrophilic borane compounds may be used in amounts which provide a molar ratio of group 4 transition metal to boron that will be from 1:1 to 1:6, preferably from 1:1 to 1:2.

Optionally, mixtures of alkylaluminoxanes, ionic activators, and electrophilic boranes may be used as activators for the organometallic complex.

In the present invention, a chromium catalyst including optional co-catalysts, an organometallic complex and activator are co-supported (i.e. co-immobilized) on an inorganic oxide.

The present invention is not limited to any particular procedure for supporting the chromium catalyst and organometallic catalyst. Processes for depositing chromium catalysts, organometallic complexes, as well as co-catalysts and activators on a support are well known in the art (for some non-limiting examples of catalyst supporting methods, see "Supported Catalysts" by James H. Clark and Duncan J. Macquarrie, published online November 15, 2002 in the Kirk-Othmer Encyclopedia of Chemical Technology Copyright © 2001 by John Wiley & Sons, Inc.; for some non-limiting methods to support chromium catalysts see: US Pat. Nos 6,982,304; 6,013,595; 6,734,131; 6,958,375; and EP No. 640625; for some non-limiting methods to support an organometallic catalyst see US Pat. No. 5,965,677). For example, catalysts, co-catalysts and activators may be added by co-precipitation or spray drying with the support material or alternatively by a wet incipient method (i.e. wet impregnation) or similar method using hydrocarbon solvents/diluents or other suitable solvents/diluents.

The chromium catalyst and the organometallic complex as well as co-catalyst and activator can be added to the support material in any order. The catalyst system can be prepared in a stepwise manner in which catalyst precursors or intermediates are isolated or not isolated.

It is preferable to add the chromium catalyst and the optional co-catalyst to a support prior to the addition of the organometallic complex and activator. The ogranometallic complex and activator can be added simultaneously or in pre-mixed form or they may be added separately and in any order. The organometallic complex and activator can also be added to the supported chromium catalyst in situ (i.e. in a polymerization reactor or on route to a reactor).

A support comprising the chromium catalyst may first be obtained by any suitable known means. For example, the supported chromium catalyst may be obtained by impregnating the support with an aqueous or organic solution of a chromium compound, by co-precipitation or by spray drying with a support material. Alternatively, the supported chromium catalyst may be obtained by mechanical mixing of a solid chromium compound with a support material, followed by heating the mixture. In another variation, the chromium compound may be incorporated into the support during the manufacture thereof so as to obtain a homogeneous dispersion of the metal in the support. For example, a chromium compound may be spray dried with the constituent parts of a clay-inorganic oxide agglomerate to provide a supported chromium catalyst, as is taught by US Pat. No 6,734,131.

The incorporation of the organometallic complex and the activator may be performed by any suitable known means. For example, the organometallic complex and activator may be slurried or dissolved in a suitable diluent or solvent and then added to the support. Suitable solvents or diluents include but are not limited to hydrocarbons and mineral oil. Alternatively, the organometallic complex may be added to the solid support, in the form or a solid, solution or slurry, followed by the addition of the activator in solid form or as a solution or slurry. Organometallic complex, activator, and support can be mixed together in the presence or absence of a solvent. Preferably, a solution or slurry containing an organometallic complex and activator in hydrocarbon is added to a support containing the chromium catalyst and optionally a co-catalyst.

The amount of chromium catalyst added to the support should be sufficient to obtain between 0.01% and 10%, preferably from 0.1 % to 3%, by weight of chromium, calculated as metallic chromium, based on the weight of the support.

The supported chromium catalyst may require activation prior to use or prior to addition of the organometallic complex and activator. Activation may involve calcination (as is preferred in the case of chromium oxide) or the addition of a co-catalyst compound (as is preferred in the case of silyl chromate).

Activation by calcination can be accomplished by heating the supported chromium catalyst in steam, dry air or another oxygen containing gas at temperatures up to the sintering temperature of the support. Activation temperatures are in the range of 350°C to 950°C, preferably from 500°C to 900°C and activation times are from about 10 mins to as about 72 hrs. The supported chromium catalyst may optionally be reduced after activation using for example, carbon monoxide or a mixture of carbon monoxide and nitrogen.

The amount of organometallic complex added to the support should be sufficient to obtain between 0.01 % and 10%, preferably from 0.1 % to 3%, by weight of transition metal, calculated as metallic Ti, Zr, Hf or combined total thereof, based on the weight of the support.

Clearly, a person skilled in the art will recognize that a number of different procedures can be used to prepare the co-supported catalyst of the current invention without changing the scope of the invention described herein (see for example US Pat No. 6,013,595). In addition, the current invention contemplates the use of one or more than one chromium catalyst, cocatalyst, organometallic complex and activator, as well as mixtures thereof.

The ratio of the chromium catalyst to the organometallic catalyst used in the co-supported catalyst system of the current invention, is an important determinant of the resulting polymer product properties, and may be changed in order to control or customize the properties of the finished polymer. Thus, the ratios used are subject to wide variation, but will generally include a molar ratio range of from 1:99 to 99:1 of the chromium catalyst metal, Cr to the group 4 metal of the organometallic catalyst. The preferred molar ratios of the Cr metal to group 4 metal are from 5:95 to 95:5.

The catalyst system of the current invention, may be prepared in situ in a polymerization reactor, in line and/or on route to a polymerization reactor or it may be prepared and optionally isolated prior to use in a polymerization process. Preferably, the catalyst system is prepared prior to addition to a polymerization reactor.

The process of the current invention may be used for solution, slurry or gas phase polymerization processes. Preferably, the process used is a gas-phase or slurry phase polymerization process.

Slurry polymerization is well known in the art. The polymerization is conducted in an inert diluent in which the resulting polymer is not soluble. The monomers may be soluble in the diluent. The diluent is typically a hydrocarbyl compound such as a C₅₋₁₂ hydrocarbon that may be unsubstituted or substituted by a C₁₋₄ alkyl radical. Preferably the diluent is un-substituted. Some potential diluents include pentane, hexane, heptane, octane, cyclohexane and methylcyclohexane. The diluent may be hydrogenated naphtha. The diluent may also be a C₈₋₁₂ aromatic hydrocarbon such as that sold by Exxon Chemical Company under the trademark ISOPAR® E. Typically, monomers are dispersed or dissolved in the diluent. The polymerization reaction takes place at temperatures from about 20°C to about 120°C, preferably from about 40°C to 100°C. The pressure in the reactor may be from about 15 psi to about 4,500 psi, preferably from about 100 to 1,500 psi. The reactors may be stirred tank or "loop" reactors with a settling leg to remove product polymer.

In gas phase polymerization, pressures can be in the range of 25 to 1000 psi, preferably 50 to 500 psi, most preferably 100 to 450 psi, and temperatures will be in the range of from 30 to 130°C, preferably 65 to 115°C. Stirred or preferably fluidized bed gas phase reactors can be used. In the gas phase fluidized bed polymerization of olefins, the polymerization is conducted in a fluidized bed reactor wherein a bed of polymer particles are maintained in a fluidized state by means of an ascending gas stream comprising the gaseous reaction monomer. The polymerization of olefins in a stirred bed reactor differs from polymerization in a gas fluidized bed reactor by the action of a mechanical stirrer within the reaction zone that contributes to fluidization of the bed. The gas phase polymerization may be conducted in dry mode, condensed mode or super condensed mode, all of which are well known in the art. Polymerization takes place in the presence of a non polymerizable gas that may be inert or may be an alkane, or a mixture thereof and typically hydrogen. For a detailed description of gas phase fluidized bed polymerization processes see U.S. Pat. Nos 4,543, 399; 4,588,790; 5,028,670; 5,352,769 and 5,405,922 which are incorporated herein by reference.

The polymerization process of the current invention preferably takes place in a single gas phase or slurry phase polymerization reactor. The product is removed from the reactor by conventional means and separated from the diluent and/or residual monomers before further treatment.

In the current invention, the catalyst system may be fed to a polymerization reactor in a number of ways. For example, co-supported catalyst may be fed to the reactor using one or more catalyst feeders. The supported catalyst components may be fed to a reactor via a dry catalyst feeder or as a slurry in a hydrocarbon or other suitable viscous inert liquid such as but not limited to mineral oil. The catalyst slurry can be fed into the reactor using any suitable liquid delivery system, such as but not limited to a high pressure syringe pump or other displacement device.

Optionally, scavengers are added to the polymerization reactor. In an aspect of the invention, scavengers are organoaluminum compounds having the formula:

Al⁴(X⁵)ₙ(X⁶)₃₋ₙ,

where (X⁵) is a hydrocarbyl having from 1 to about 20 carbon atoms; (X⁶) is selected from alkoxide or aryloxide, any one of which having from 1 to about 20 carbon atoms; halide; or hydride; and n is a number from 1 to 3, inclusive; or alkylaluminoxanes having the formula:

R³⁰₂Al⁵O(R³⁰Al⁵O)ₘAl⁵R³⁰₂ wherein each R³⁰ is independently selected from the group consisting of C₁₋₂₀ hydrocarbyl radicals and m is from 3 to 50. Preferred scavengers are trialkylaluminum compounds.

Optionally, the scavengers may be independently supported. For example, an inorganic oxide that has been treated with an organoaluminum compound or an alkylaluminoxane may be added to the polymerization reactor. Suitable, inorganic oxides are as described above, with silica being preferred. The method of addition of the organoaluminum or alkylaluminoxane compounds to the inorganic oxide is not specifically defined and is carried out by procedures well known in the art.

The catalyst system of this invention is used to polymerize either ethylene alone (i.e. homopolymerization) or ethylene in conjunction with higher monomers (i.e. copolymerization), such as any one of C₃-C₁₀ α-olefins, including but not limited to propylene, 1-butene, 1-pentene, 1-hexene, 4-methyl-1-pentene, 1-heptene or 1-octene, preferably 1-butene, 4-methyl-1-pentene, 1-hexene, and 1-octene.

The polymers prepared in accordance with the present invention have a broad, bimodal or multimodal molecular weight distribution. Overall, the weight average molecular weight (Mw) of the resins will preferably be greater than about 30,000 ranging up to 10⁷, preferably 10⁵ to 10⁶. The polymers may have a density as low as 0.89 g/cc and as high as 0.965 g/cc as measured according to the procedure of ASTM D-792. Preferably, the polymers will have a density from 0.912 g/cc to 0.960 g/cm³.

By the term "bimodal" it is meant that there will be a lower molecular weight component observed as a peak or shoulder in a GPC analysis (according to ASTM D6474-99) and there will be one or more higher molecular weight components observed as a separate peak or shoulder in a GPC analysis (i.e. the molecular weight distribution, can be said to have two maxima in a molecular weight distribution curve). The term "multimodal" denotes the presence of more than two maxima in a molecular weight distribution curve generated according to the method of ASTM D6474-99.

In an aspect of the invention, the lower molecular weight component will be present in an amount from 1 to 99, preferably from 30 to 95, most preferably from 40 to 95 weight % of the total bimodal resin. The high molecular weight component may be present in amounts from 99 to 1, preferably 70 to 5, most preferably from about 60 to 5 weight % of the total polymer.

In an aspect of the invention, the low molecular weight polyethylene component may have a weight average molecular weight greater than 5,000, typically from 10,000 to 140,000, preferably from about 15,000 to about 100,000. The low molecular weight polyethylene may have a polydispersity (Mw/Mn) greater than about 5 and less than about 50, typically from 10 to 45. The higher molecular weight portion may have a weight average molecular weight from 100,000 to 800,000, preferably from about 140,000 to about 400,000 and a polydispersity less than about 10.

In an aspect of the invention, the catalyst system and process of the current invention produces polymers having reversed or partially reversed comonomer distributions. The phrase "reversed comonomer distribution" or "partially reversed comonomer distribution" means that on deconvolution of GPC-FTIR (or temperature raising elution fractionation, TREF) data (profiles) (typically using molecular weight distribution segments of not less than 10,000) there is one or more higher molecular weight components having a higher comonomer incorporation than in one or more lower molecular weight segments. If the comonomer incorporation rises with molecular weight, the distribution is described as "reversed". Where the comonomer incorporation rises with increasing molecular weight and then declines, the comonomer distribution is described as "partially reversed".

The polymers produced in accordance with the present inventive process are suitable for use in a number of applications including for example film (blown and cast), extruded articles such as pipe (for potable water or for gas), rotomolded articles, injection molded articles, blow molded articles and geomembranes.

The invention will now be illustrated by the following non-limiting examples.

### EXAMPLES

**General Considerations:** Molecular weight distribution and molecular weight averages (Mw, Mn, Mz) of resins were determined using high temperature Gel Permeation Chromatography (GPC) according to the ASTM D6474: "Standard Test Method for Determining Molecular Weight Distribution and Molecular Weight Averages of Polyolefins". The system was calibrated using the 16 polystyrene standards (Mw/Mn<1.1) in Mw range 5×10³ to 8×10⁶ and 3 hydrocarbon Standards C₆₀, C₄₀, and C₂₀. The operating conditions are listed below:

| | |
|---|---|
| GPC instrument: | Polymer Laboratories ® 220 equipped with a refractive index detector |
| Software: | Viscotek® DM 400 Data Manager with Trisec® software |
| Columns: | 4 Shodex® AT-800/S series cross-linked styrene-divinylbenzene with pore sizes 10³ Å, 10⁴ Å, 10⁵ Å, 10⁶Å |
| Mobile Phase: | 1,2,4-trichlorobenzene |
| Temperature: | 140°C. |
| Flow Rate: | 1.0 ml/min |
| Sample Preparation: | Samples were dissolved in 1,2,4-trichloro-benzene by heating on a rotating wheel for four hours at 150°C. |
| Sample Filtration: | No |
| Sample Concentration: | 0.1% (w/v) |

The branch frequency of copolymer samples was determined by Fourier Transform Infrared Spectroscopy (FTIR) as per the ASTM D6645-01 method. A Thermo-Nicolet 750 Magna-IR Spectrophotometer equipped with OMNIC version 7.2a software was used for the measurements.

### Example 1 (Comparative)

**Preparation of an Organometallic Complex,** ***(Cp-C₆F₅)Ti(N=P^{t}Bu₃)Cl₂:** (a) Preparation of Cp(C₆F₅)SiMe₃*. A solution of hexafluorobenzene (59.54 g, 320 mmol) in 50 mL of tetrahydrofuran (THF) was added dropwise over 10 to 15 minutes to two molar equivalents of sodium cyclopentadienide in THF (320 mL, 2.0 M, 640 mmol). The reaction was mildly exothermic and the reaction was maintained at about room temperature by cooling the reaction flask in an oil bath. On completing C₆F₆ addition, the purple reaction mixture was heated and kept at 60°C for 3 hours. The reaction was allowed to cool slightly and was then added to neat chlorotrimethylsilane (60 mL, 450 mmol) at 0°C over 15-30 minutes. After an additional 30 minutes, the reaction was warmed to 30°C and the THF, excess chlorotrimethylsilane and other volatiles were removed *in vacuo.* The resulting wet solid was then slurried in heptane and filtered to remove inorganic solids. The solids were washed with heptane until the filtrate was pale brown. Concentration of the heptane filtrate *in vacuo* yielded the product, (pentafluorophenylcyclopentadienyl)-trimethylsilane (76.60 g, 79%), as a dark brown oil with a purity of 88% by GC. *(b) Preparation of Cp(C₆F₅)TiCl₃*. Cp(C₆F₅)SiMe₃ (65.05 g, 214 mmol) was added drop-wise over 15 to 20 minutes to neat titanium tetrachloride (49.10 g, 258 mmol) while stirring at 60°C. A dark red-brown solution resulted, which was subsequently stirred for 3 hours at 60°C. Heptane (100 ml) was then added to give a slurry, which was cooled by removing solvent *in vacuo* to half-initial volume. The reaction was filtered and the isolated solid washed with additional heptane. The orange-brown product was dried *in vacuo.* Yield = 57.42 g (148 mmol, 70%). *(c) Preparation of (Cₚ-C₆F₅)Ti(N=P^{t}Bu₃)Cl₂*. Cp(C₆F₅)TiCl₃ (30.5g, 79mmol) and trimethylsilyl-tri-t-butylphosphinimine, *tBu₃P(=N-SiMe*₃*)* (22.92, 79.3 mmol) were combined as solids and toluene (30 g) was added. The reaction was heated at 100°C for 1 hour and then heptane (200 mL) was added. The resulting yellow slurry was filtered and the solid product dried *in vacuo*. Yield = 42.9 g, 96%.

**Preparation of an Organometallic Catalyst on an Inorganic Oxide Support:** Sylopol 2408^{®} silica, purchased from Grace Davison, was calcined by fluidizing with air at 200°C for 2 hours and then under a flow of nitrogen at 600°C for 6 hours. A slurry was made by adding 3g of the calcined silica to 10 mL of toluene. To the silica slurry was added 9 g of a 10 wt% methyl aluminoxane (MAO) solution in toluene purchased from Albemarle. The resulting mixture was stirred for 1 hour at ambient temperature. Separately, 72 mg of the organometallic complex, *(Cp-C₆F₅)Ti(N=P^{t}Bu₃)Cl₂* prepared as above was dissolved in 10mL of toluene and the resulting solution was added to the MAO/silica slurry. After one hour of stirring at ambient temperature, the slurry was filtered. The solid component was washed with toluene and anhydrous pentane. The final product was dried in vacuum to 300 mTorr (40 Pa) and stored under nitrogen until used. The Al content in the dry catalyst was 10.5 wt%.

**Polymerization:** A 2 L stirred tank reactor was heated at 100°C for 1 hour and thoroughly purged with nitrogen. The reactor was then cooled to 95°C. The following components were then successively added into the reactor: 0.5g of Sylopol^{®} 955 silica purchased from W.R. Grace that had been dehydrated at 200°C in air for 2 hrs and 600°C in nitrogen for 6hrs and treated with 0.12 g of a 25 wt% triethyl aluminum solution; 0.041 g of the silica supported organometallic catalyst prepared above; 50psig nitrogen; and 3 mL of 1-hexene. The reactor was subsequently pressurized with 150 psia of ethylene to give a total reactor pressure of approximately 200 psig. During the polymerization, ethylene was continuously fed into the reactor in order to maintain a constant reactor pressure. The polymerization was carried out at 95°C for 1 hour, yielding 8 g of polymer.

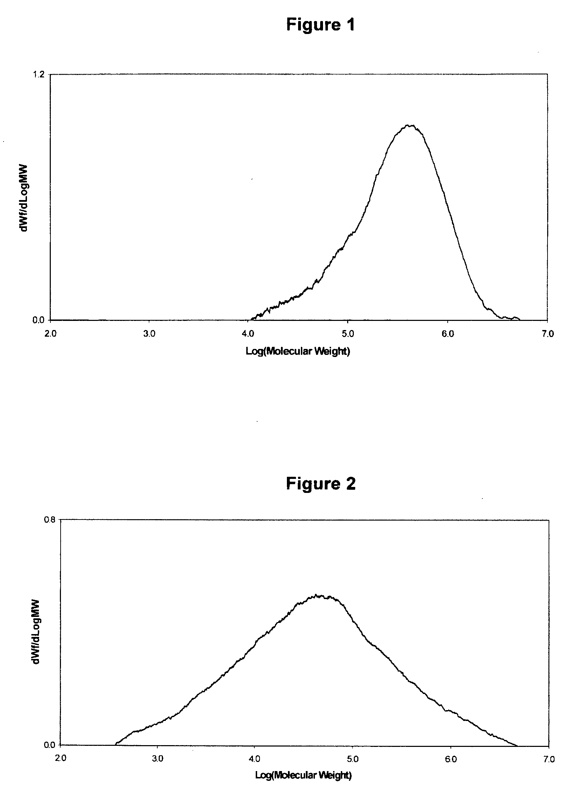

Figure 1 shows the GPC profile of the polymer. The polymer has a unimodal molecular weight distribution. The branch frequency of the polymer is shown in Table 1.

**Table 1**

| **Branch Frequency and Molecular Weight of Polymers** | | | | | | | |
|---|---|---|---|---|---|---|---|
| **Example** | **Catalyst** | **Support** | **Branch Frequency (branch/1000 C)** | **Mn (x 10³)** | **Mw (x 10³)** | **Mz (x 10³)** | **Mw/Mn** |
| Comp. Ex. 1 | organometallic cat. | Silica | 12.9 | 168 | 481 | 950 | 2.9 |
| Comp. Ex. 2 | chromium cat. | Silica | 2.7 | 9.3 | 172 | 1069 | 18.6 |
| Ex. 3 | co-supported cat. | Silica | 3.6 | 12.2 | 241 | 1,133 | 19.8 |

### Example 2 (Comparative)

### Preparation of a Chromium Catalyst on an Inorganic Oxide Support:

Sylopol 955^{®} silica, purchased from Grace Davison, was calcined by fluidizing with air at 200°C for 2 hours and then under a flow of nitrogen at 600°C for 6 hours. In an autoclave reactor were added 40 g of the calcined silica, 1.3 g of silyl chromate and 155 g of pentanes. The reactor was maintained at 50-53°C for 5 hours. 1.38 g of diethyl aluminum ethoxide diluted in 5 mL of pentanes was added to the reactor and the mixture was stirred at 50°C for 1 hour. The reactor was then heated to 80°C to distill off the solvent.

**Polymerization:** The polymerization was carried out similarly to comparative Example 1, except that 0.244 g of the silica supported chromium catalyst prepared above was used. The polymerization gave 90 g of polymer product.

Figure 2 shows the GPC profile of the polymer that exhibits a unimodal molecular weight distribution. The branch frequency of the polymer is shown in Table 1.

Comparison of Examples 1 and 2, demonstrates that under similar polymerization conditions, the silica supported chromium catalyst produced a polymer with lower molecular weight and lower comonomer incorporation than that obtained with the silica supported organometallic catalyst (see Table 1).

### Example 3 (Inventive)

**Preparation of a Co-Supported Chromium Catalyst/Organometallic Catalyst on an Inorganic Oxide:** In a flask, 3.0 g of the silica supported chromium catalyst prepared in Example 2 was added to 10 mL of toluene at room temperature. Separately, 2.0 g of a 10 wt% MAO solution in toluene was mixed with a solution of 0.015 g of the organometallic complex, *(Cₚ-C₆F₅)Ti(N=P^{t}Bu₃)Cl₂* (as prepared in Example 1), dissolved in 5 mL of toluene. The resulting solution was added to the chromium catalyst slurry and the mixture was stirred for 1 hour at room temperature. The slurry was filtered and the solid was washed with toluene and pentanes. The catalyst was then dried under vacuum. This provided a co-supported catalyst system having a molar ratio of Cr to Ti of 5.7/1.

**Polymerization Using a Co-Supported Chromium Catalyst/Organometallic Catalyst on an Inorganic Oxide in a Stirred Gas Phase Reactor:** A 2 L stirred the reactor was heated at 100°C for 1 hour and thoroughly purged with nitrogen. The reactor was then cooled to 95°C. The following components were then successively added into the reactor: 0.5 g of Sylopol^{®} 955 silica purchased from W.R. Grace that had been dehydrated at 200°C in air for 2 hrs and 600°C in nitrogen for 6 hrs and treated with 0.12 g of a 25 wt% triethyl aluminum solution; 50 psi nitrogen, 3 mL of 1-hexene; and 0.207 g of the co-supported catalyst system prepared above. The reactor was subsequently pressurized with 150 psia of ethylene to give a total reactor pressure of approximately 200 psig. During the polymerization, ethylene was continuously fed into the reactor in order to maintain a constant reactor pressure. The polymerization was carried out at 95°C for 1 hour, yielding 81 g of polymer.

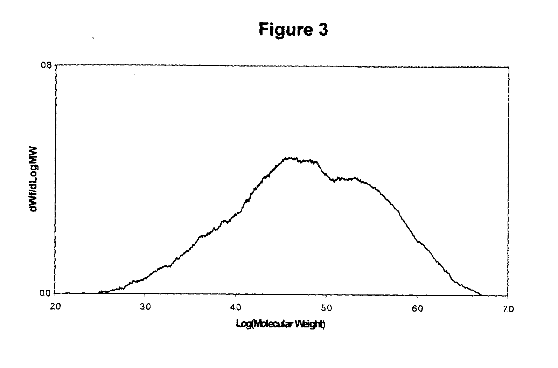

Figure 3 shows the GPC profile of the polymer produced according to Example 3. The polymer clearly exhibits a bimodal molecular weight distribution. By comparing Figures 1-3, a person skilled in the art would recognize that the low molecular weight fraction can be attributed to polymer made by the chromium catalyst and the high molecular weight fraction can be attributed to polymer produced by the organometallic catalyst.

Due to poor solubility, GPC-FTIR data could not be obtained for a polymer produced according to Example 3. However, a person skilled in the art will recognize that use of appropriate ratios of Cr to Ti can provide a bimodal resin which exhibits reversed co-monomer incorporation, since the organometallic catalyst incorporates higher amounts of comonomer than does the chromium catalyst as demonstrated by the higher branch frequencies obtained for the supported organometallic catalyst (Example 1) relative to the supported chromium catalyst (Example 2), under similar polymerization conditions (compare Examples 1 and 2 in Table 1).

### INDUSTRIAL APPLICABILITY

The invention provides a co-supported catalyst system suitable for use in the production of bimodal polyethylene having reversed comonomer incorporation. Bimodal polyethylenes with a reversed comonomer content are useful in numerous applications including for example blown and cast film, extruded articles such as pipe (for potable water or for gas), rotomolded articles, injection molded articles, blow molded articles and geomembranes.

## Claims

1. A catalyst system for homopolymerization or copolymerization of ethylene, said catalyst system comprising:
(a) a chromium catalyst; and
(b) an organometallic catalyst;
co-supported on an inorganic oxide, wherein the organometallic catalyst comprises:
i) an organometallic complex having the formula: 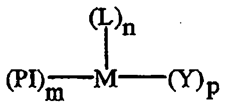 wherein, M is a group 4 metal; Pl is a phosphinimide ligand or a ketimide ligand; L is a monoanionic ligand selected from the group consisting of a cyclopentadienyl type ligand or a bulky heteroatom ligand; Y is an activatable ligand; Pl and L may optionally be joined by a bridging group; two Pl ligands may optionally be joined by a bridging group; m is 1 or 2; n is 0 or 1; and p is an integer and the sum of m+n+p equals the valence state of M; and
ii) an activator.

2. The catalyst system of claim 1, wherein the inorganic oxide is selected from the group consisting essentially of SiO₂, Al₂O₃, MgO, AlPO₄, TiO₂, ZrO₂ and mixtures thereof.

3. The catalyst system of claim 2, wherein the molar ratio of Cr to group 4 metal is from 5:95 to 95:5.

4. The catalyst system of claim 3, wherein the chromium catalyst is a silyl chromium catalyst.

5. The catalyst system of claim 4, wherein the activator is selected from the group consisting of alkylaluminoxanes, ionic activators and mixtures thereof.

6. The catalyst system of claim 5, wherein Pl is a phosphinimide ligand.

7. The catalyst system of claim 6, wherein L is a cyclopentadienyl type ligand.

8. The catalyst system according to claim 6, wherein L a bulky heteroatom type ligand.

9. The catalyst system according to claim 8, wherein the bulky heteroatom type ligand is a borabenzene ligand.

10. The catalyst system according to claims 6-9, wherein Y is independently selected from the group consisting of a hydrogen atom; a halogen atom, a C₁₋₁₀ hydrocarbyl radical; a C₁₋₁₀ alkoxy radical; a C₅₋₁₀ aryl oxide radical; each of which said hydrocarbyl, alkoxy, and aryl oxide radicals may be un-substituted by or further substituted by one or more substituents selected from the group consisting of a halogen atom; a C₁₋₈ alkyl radical; a C₁₋₈ alkoxy radical; a C₆₋₁₀ aryl or aryloxy radical; an amido radical which is unsubstituted or substituted by up to two C₁₋₈ alkyl radicals; and a phosphido radical which is un-substituted or substituted by up to two C₁₋₈ alkyl radicals.

11. The catalyst system of claim 5, wherein Pl is a ketimide ligand.

12. The catalyst system of claim 11, wherein L is a cyclopentadienyl type ligand.

13. The catalyst system according to claim 11, wherein L a bulky heteroatom type ligand.

14. The catalyst system according to claim 13, wherein the bulky heteroatom type ligand is a borabenzene ligand.

15. The catalyst system according to claims 11-14, wherein Y is independently selected from the group consisting of a hydrogen atom; a halogen atom, a C₁₋₁₀ hydrocarbyl radical; a C₁₋₁₀ alkoxy radical; a C₅₋₁₀ aryl oxide radical; each of which said hydrocarbyl, alkoxy, and aryl oxide radicals may be un-substituted by or further substituted by one or more substituents selected from the group consisting of a halogen atom; a C₁₋₈ alkyl radical; a C₁₋₈ alkoxy radical; a C₆₋₁₀ aryl or aryloxy radical; an amido radical which is un-substituted or substituted by up to two C₁₋₈ alkyl radicals; and a phosphido radical which is un-substituted or substituted by up to two C₁₋₈ alkyl radicals.

16. A process to produce an ethylene homopolymer or copolymer comprising contacting ethylene and optionally an α-olefin with a catalyst system in a polymerization reactor, wherein the catalyst system comprises:
a) a chromium catalyst; and
b) an organometallic catalyst;
co-supported on an inorganic oxide, wherein the organometallic catalyst comprises:
i) an organometallic complex having the formula: 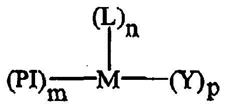 wherein, M is a group 4 metal; Pl is a phosphinimide ligand or a ketimide ligand; L is a monoanionic ligand selected from the group consisting of a cyclopentadienyl type ligand or a bulky heteroatom ligand; Y is an activatable ligand; Pl and L may optionally be joined by a bridging group; two Pl ligands may optionally be joined by a bridging group; m is 1 or 2; n is 0 or 1; and p is an integer and the sum of m+n+p equals the valence state of M; and
ii) an activator.

## Patentansprüche

1. Katalysatorsystem für die Homopolymerisation oder Copolymerisation von Ethylen, wobei das Katalysatorsystem Folgendes umfasst:
(a) einen Chrom-Katalysator; und
(b) einen organometallischen Katalysator;
gemeinsam getragen auf einem anorganischen Oxid, worin der organometallische Katalysator Folgendes umfasst:
i) einen organometallischen Komplex mit der Formel: 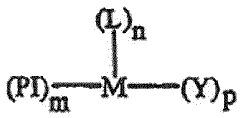 worin M ein Metall der Gruppe 4 ist; Pl ein Phosphinimid-Ligand oder ein Ketimid-Ligand ist; L ein monoanionischer Ligand, ausgewählt aus der Gruppe bestehend aus einem Liganden vom Cyclopentadienyl-Typ oder einem sperrigen Heteroatom-Liganden, ist; Y ein aktivierbarer Ligand ist; Pl und L gegebenenfalls durch eine Überbrückungsgruppe verbunden sein können; zwei Pl-Liganden gegebenenfalls durch eine Überbrückungsgruppe verbunden sein können; m 1 oder 2 ist; n 0 oder 1 ist; und p eine Ganzzahl ist und die Summe von m + n + p gleich dem Valenzzustand von M ist; und
ii) einen Aktivator.

2. Katalysatorsystem nach Anspruch 1, worin das anorganische Oxid aus der Gruppe im Wesentlichen bestehend aus SiO₂, Al₂O₃, MgO, AlPO₄, TiO₂, ZrO₂ und Gemischen daraus ausgewählt ist.

3. Katalysatorsystem nach Anspruch 2, worin das Molverhältnis von Cr zum Metall der Gruppe 4 von 5:95 bis 95:5 beträgt.

4. Katalysatorsystem nach Anspruch 3, worin der Chrom-Katalysator ein Silylchrom-Katalysator ist.

5. Katalysatorsystem nach Anspruch 4, worin der Aktivator aus der Gruppe bestehend aus Alkylaluminiumoxanen, ionischen Aktivatoren und Gemischen davon ausgewählt ist.

6. Katalysatorsystem nach Anspruch 5, worin Pl ein Phosphinimid-Ligand ist.

7. Katalysatorsystem nach Anspruch 6, worin L ein Ligand vom Cyclopentadienyl-Typ ist.

8. Katalysatorsystem nach Anspruch 6, worin L ein Ligand vom sperrigen Heteroatom-Typ ist.

9. Katalysatorsystem nach Anspruch 8, worin der Ligand vom sperrigen Heteroatom-Typ ein Borabenzol-Ligand ist.

10. Katalysatorsystem nach Ansprüchen 6-9, worin Y unabhängig aus der Gruppe bestehend aus einem Wasserstoffatom; einem Halogenatom, einem C₁₋₁₀-Hydrocarbylrest; einem C₁₋₁₀-Alkoxyrest, einem C₅₋₁₀-Aryloxidrest ausgewählt ist; wobei jeder der Hydrocarbyl-, Alkoxy- und Aryloxidreste unsubstituiert oder weiter mit einem oder mehreren Substituenten ausgewählt aus der Gruppe bestehend aus einem Halogenatom; einem C₁₋₈-Alkylrest, einem C₁₋₈-Alkoxyrest, einem C₆₋₁₀-Aryl- oder -Aryloxyrest; einem Amidorest, der unsubstituiert oder mit bis zu zwei C₁₋₈-Alkylresten substituiert ist; und einem Phosphidorest, der unsubstituiert oder mit bis zu zwei C₁₋₈-Alkylresten substituiert ist, substituiert ist.

11. Katalysatorsystem nach Anspruch 5, worin Pl ein Ketimid-Ligand ist.

12. Katalysatorsystem nach Anspruch 11, worin L ein Ligand vom Cyclopentadienyl-Typ ist.

13. Katalysatorsystem nach Anspruch 11, worin L ein Ligand vom sperrigen Heteroatom-Typ ist.

14. Katalysatorsystem nach Anspruch 13, worin der Ligand vom sperrigen Heteroatom-Typ ein Borabenzol-Ligand ist.

15. Katalysatorsystem nach Ansprüchen 11-14, worin Y unabhängig aus der Gruppe bestehend aus einem Wasserstoffatom; einem Halogenatom, einem C₁₋₁₀-Hydrocarbylrest; einem C₁₋₁₀-Alkoxyrest, einem C₅₋₁₀-Aryloxidrest ausgewählt ist; wobei jeder der Hydrocarbyl-, Alkoxy- und Aryloxidreste unsubstituiert oder weiter mit einem oder mehreren Substituenten ausgewählt aus der Gruppe bestehend aus einem Halogenatom; einem C₁₋₈-Alkylrest, einem C₁₋₈-Alkoxyrest, einem C₆₋₁₀-Aryl- oder -Aryloxyrest; einem Amidorest, der unsubstituiert oder mit bis zu zwei C₁₋₈-Alkylresten substituiert ist; und einem Phosphidorest, der unsubstituiert oder mit bis zu zwei C₁₋₈-Alkylresten substituiert ist, substituiert ist.

16. Verfahren zur Herstellung eines Ethylen-Homopolymers oder -Copolymers umfassend das Kontaktieren von Ethylen und gegebenenfalls eines α-Olefins mit einem Katalysatorsystem in einem Polymerisationsreaktor, worin das Katalysatorsystem Folgendes umfasst:
(a) einen Chrom-Katalysator; und
(b) einen organometallischen Katalysator;
gemeinsam getragen auf einem anorganischen Oxid, worin der organometallische Katalysator Folgendes umfasst:
i) einen organometallischen Komplex mit der Formel: 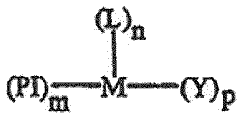 worin M ein Metall der Gruppe 4 ist; Pl ein Phosphinimid-Ligand oder ein Ketimid-Ligand ist; L ein monoanionischer Ligand, ausgewählt aus der Gruppe bestehend aus einem Liganden vom Cyclopentadienyl-Typ oder einem sperrigen Heteroatom-Liganden, ist; Y ein aktivierbarer Ligand ist; Pl und L gegebenenfalls durch eine Überbrückungsgruppe verbunden sein können; zwei Pl-Liganden gegebenenfalls durch eine Überbrückungsgruppe verbunden sein können; m 1 oder 2 ist; n 0 oder 1 ist; und p eine Ganzzahl ist und die Summe von m + n + p gleich dem Valenzzustand von M ist; und
ii) einen Aktivator.

## Revendications

1. Système catalyseur pour l'homo-polymérisation ou la copolymérisation d'éthylène, ledit système catalyseur comprenant :
(a) un catalyseur de chrome ; et
(b) un catalyseur organométallique ;
co-supportés sur un oxyde inorganique, où le catalyseur organométallique comprend :
i) un complexe organométallique ayant la formule : 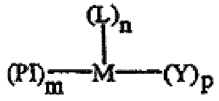 où M est un métal du groupe 4 ; Pl est un ligand de phosphinimide ou un ligand de kétimide ; L est un ligand mono-anionique sélectionné dans le groupe consistant en un ligand de type cyclopentadiényle ou un ligand d'hétéroatome volumineux ; Y est un ligand activable ; Pl et L peuvent être liés en option par un groupe de pontage ; deux ligands PI peuvent en option être liés par un groupe de pontage ; m est 1 ou 2 ; n est 0 ou 1 ; et p est un entier, et la somme de m+n+p équivaut à l'état de valence de M ; et
ii) un activateur.

2. Système catalyseur selon la revendication 1, dans lequel l'oxyde inorganique est sélectionné dans le groupe consistant essentiellement en SiO₂, Al₂O₃, MgO, AlPO₄, TiO₂, ZrO₂ et leurs mélanges.

3. Système catalyseur selon la revendication 2, dans lequel le rapport molaire du Cr au métal du groupe 4 est de 5 :95 à 95 :5.

4. Système catalyseur selon la revendication 3, dans lequel le catalyseur de chrome est un catalyseur de silyle chrome.

5. Système catalyseur selon la revendication 4, dans lequel l'activateur est sélectionné dans le groupe consistant en alkylaluminoxanes, activateurs ioniques et leurs mélanges.

6. Système catalyseur selon la revendication 5, dans lequel Pl est un ligand de phosphinimide.

7. Système catalyseur selon la revendication 6, dans lequel L est un ligand de type cyclopentadiényle.

8. Système catalyseur selon la revendication 6, dans lequel L est un ligand du type d'hétéroatome volumineux.

9. Système catalyseur selon la revendication 8, dans lequel le ligand du type d'hétéroatome volumineux est un ligand de borabenzène.

10. Système catalyseur selon les revendications 6 à 9, dans lequel Y est indépendamment sélectionné dans le groupe consistant en un atome d'hydrogène ; un atome d'halogène, un radical hydrocarbyle C₁₋₁₀ ; un radical alkoxy C₁₋₁₀ ; un radical d'aryle oxyde C₅₋₁₀ ; chacun desdits radicaux hydrocarbyle, alkoxy et aryle peut être non substitué par ou substitué en outre par un ou plusieurs substituents sélectionnés dans le groupe consistang en un atome d'halogène ; un radical alkyl C₁₋₈ ; un radical alkoxy C₁₋₈ ; un radical aryle ou aryloxy C₆₋₁₀ ; un radical amido qui est non substitué ou substitué par jusqu'à deux radicaux alkyle C₁₋₈; et un radical phosphido qui est non substitué ou substitué par jusqu'à deux radicaux alkyle C₁₋₈.

11. Système catalyseur selon la revendication 5, dans lequel Pl est un ligand de kétimide.

12. Système catalyseur selon la revendication 11, dans lequel L est un ligand du type cyclopentadiényle.

13. Système catalyseur selon la revendication 11, dans lequel L est un ligand de type d'hétéroatome volumineux.

14. Système catalyseur selon la revendication 13, dans lequel le ligand de type d'hétéroatome volumineux est un ligand de borabenzène.

15. Système catalyseur selon les revendications 11-14, dans lequel Y est indépendamment sélectionné dans le groupe consistant en un atome d'hydrogène ; un atome d'halogène, un radical hydrocarbyle C₁₋₁₀ ; un radical alkoxy C₁₋₁₀ ; un radical d'aryle oxyde C₅₋₁₀ ; chacun desdits radicaux hydrocarbyle, alkoxy et aryle peut être non substitué ou substitué en outre par un ou plusieurs substituants sélectionnés dans le groupe consistant en un atome d'halogène, un radical alkyle C₁₋₈ ; un radical alkoxy C₁₋₈ ; un radical aryle ou aryloxy C₆₋₁₀ ; un radical amido qui est non substitué ou substitué par jusqu'à deux radicaux alkyles C₁₋₈ ; et un radical phosphido qui est non substitué ou substitué par jusqu'à deux radicaux alkyles C₁₋₋₈.

16. Procédé de production d'un homo-polymère ou copolymère d'éthylène comprenant la mise en contact d'éthylène et en option d'une a-oléfine avec un système catalyseur dans un réacteur de polymérisation, où le système catalyseur comprend :
a) un catalyseur de chrome ; et
b) un catalyseur organométallique ;
co-supportés sur un oxyde inorganique, où le catalyseur organométallique comprend :
i) un complexe organométallique ayant la formule : 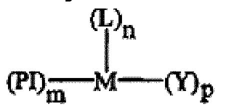 où M est un métal du groupe 4 ; Pl est un ligand de phosphinimide ou un ligand de kétimide ; L est un ligand mono-anionique sélectionné dans le groupe consistant en un ligand de type cyclopentadiényle ou un ligand d'hétéroatome volumineux ; Y est un ligand activable ; Pl et L peuvent être liés en option par un groupe de pontage ; deux ligands Pl peuvent en option être liés par un groupe de pontage ; m est 1 ou 2 ; n est 0 ou 1 ; et p est un entier, et la somme de m+n+p équivaut à l'état de valence de M ; et
ii) un activateur.
